# EUROPÄISCHE PATENTSCHRIFT

(11) **EP 2 388 063 B1**
(45) Veröffentlichungstag und Bekanntmachung des Hinweises auf die Patenterteilung: **21.05.2014**
(21) Anmeldenummer: 11156575.0
(22) Anmeldetag: 02.03.2011
(51) Int. Cl.: B01F 3/04, B01F 5/04, B01F 5/06, F01N 3/28

(54) **Abgasanlage enthaltend einen statischen Mischer**
Exhaust gas system comprising a static mixer
Système d'échappement comprenant un mélangeur statique

(30) Priorität: 19.05.2010 DE 102010021040
(43) Veröffentlichungstag der Anmeldung: 23.11.2011
(73) Patentinhaber: Eberspächer Exhaust Technology GmbH & Co. KG, 66539 Neunkirchen (DE)
(72) Erfinder: Jebasinski, Rolf, 70794, Filderstadt (DE)
(74) Vertreter: BRP Renaud & Partner

(56) Entgegenhaltungen:
- EP-A2- 1 760 284
- DE-A1-102004 038 140
- DE-A1-102008 017 395
- DE-C1- 3 940 747
- GB-A- 2 236 690
- JP-A- 10 231 721
- JP-A- 10 299 465
- US-A1- 2009 183 496
- US-A1- 2010 071 352

## Beschreibung

Die vorliegende Erfindung betrifft eine Abgasanlage, die mit einem statischen Mischer zum Durchmischen einer Strömung in einer die Strömung führenden Leitung ausgestattet ist, mit den Merkmalen des Oberbegriffs der Ansprüche 1 und 2.

In vielen Bereichen der Technik ist es erforderlich, eine mehrphasige Strömung zu homogenisieren. Hierzu kann in einer die Strömung führenden Leitung ein Mischer stationär angeordnet sein, der von der Strömung durchströmt wird und dabei die einzelnen Phasen der Strömung vermischt, was zur gewünschten Homogenisierung führt. Ein derartiger, durchströmter, stationär angeordneter Mischer wird auch als statischer Mischer bezeichnet. Der statische Mischer kann beispielsweise zum Durchmischen einer Strömung verwendet werden, die zwei oder mehr Fluidphasen aufweist. Beispielsweise können zwei verschiedene Gase oder zwei verschiedene Flüssigkeiten zu durchmischen sein. Ebenso ist denkbar, zumindest eine Flüssigphase mit wenigstens einer Gasphase zu durchmischen, wobei gleichzeitig auch eine Verdampfung der Flüssigphase angestrebt sein kann.

Bei modernen Abgasanlagen kann eine Reduzierung von Stickoxiden mit Hilfe eines SCR-Katalysators in Verbindung mit einem der Abgasströmung zugeführten Reduktionsmittel realisiert werden. Als Reduktionsmittel eignet sich beispielsweise Ammoniak, das bevorzugt in Form einer wässrigen Harnstofflösung dem heißen Abgas in flüssiger Form zugeführt wird. Insbesondere wird die wässrige Harnstofflösung in die Abgasströmung eingedüst. Bis zum SCR-Katalysator soll die eingedüste Harnstofflösung vollständig verdampfen und homogen in der Abgasströmung verteilt sein, um die gewünschte Reduzierung der Stickoxide realisieren zu können. Damit diese Verdampfung und Homogenisierung auf einer möglichst kurzen Wegstrecke realisierbar ist, können statische Mischer zum Einsatz kommen. Der jeweilige statische Mischer ist dann stromab einer Einspritzeinrichtung zum Einbringen des Reduktionsmittels und stromauf des SCR-Katalysators positioniert.

Eine andere mögliche Anwendung ergibt sich bei der Regeneration von Partikelfiltern, die hierzu auf eine Selbstentzündungstemperatur der angelagerten Partikel erhitzt werden müssen. Zu diesem Zweck kann stromauf des jeweiligen Partikelfilters ein Oxidationskatalysator angeordnet sein, mit dem Kraftstoff exotherm umgesetzt werden kann, der zu diesem Zweck stromauf in das Abgas eingedüst wird. Hierdurch wird das Abgas stark erhitzt, und das Abgas transportiert dann die Wärme zum stromab liegenden Partikelfilter, um diesen zu erhitzen. Auch für diese Anwendung ist eine gute Vermischung und Verdampfung des eingedüsten Kraftstoffs mit dem Abgas von Vorteil.

Die Verwendung derartiger Mischer in der Abgasanlage ist jedoch problematisch. Um auch bei relativ niedrigen Abgastemperaturen und vergleichsweise kleinen Strömungsgeschwindigkeiten eine ausreichende Homogenisierung erreichen zu können, muss der Mischer eine besonders hohe Effektivität besitzen, die jedoch mit einem vergleichsweise hohen Durchströmungswiderstand einhergeht. Dies führt bei höheren Strömungsgeschwindigkeiten zu einem beträchtlichen Leistungsabfall der Brennkraftmaschine. Ferner kann es vorteilhaft sein, Leitschaufeln des Mischers so im durchströmbaren Querschnitt anzuordnen, dass er in einer parallel zu Leitungslängsrichtung orientierten Projektion der Leitschaufeln weitgehend abgedeckt ist. Auf diese Weise kann beispielsweise die Gefahr eines Tröpfchendurchschlags bei niedrigen Abgastemperaturen reduziert werden. Eine solche weitgehend "blickdichte" Anordnung der Leitschaufeln führt ebenfalls zu einem hohen Durchströmungswiderstand.

Aus der DE 10 2008 017 395 A1 ist eine derartige Abgasanlage mit einem statischer Mischer bekannt, wobei der Mischer mehrere Leitschaufeln aufweist, die beim bekannten Mischer aus üblichem Stahlblech hergestellt sind.

Die JP 10 231721 A zeigt einen Katalysator, in dessen Einlasstrichter ein Strömungsleitelement angeordnet ist, das aus einer Formgedächtnislegierung hergestellt ist. In einer Niedertemperaturform wird der Abgasstrahl auf einen vergleichsweise kleinen Teilbereich des Katalysatorelements konzentriert. Bei der Hochtemperaturform wird dagegen die koplette Strinseite des Katalysatorelements mit Abgas beaufschlagt.

Weitere Katalysatoren, in dessen Einlasstrichter ein Strömungsleitelement aus einer Formgedächtnislegierung angeordnet ist und die über eine ähnliche Funktionalität verfügen, sind aus der JP 10 299465 A und der DE 39 40 747 C1 bekannt.

Die vorliegende Erfindung beschäftigt sich mit dem Problem, für eine mit einem statischen Mischer ausgestattete Abgasanlage eine verbesserte Ausführungsform anzugeben, die sich insbesondere dadurch auszeichnet, dass der Mischer einerseits eine ausreichende Mischungswirkung auch bei kleineren Strömungsgeschwindigkeiten aufweist, während er andererseits einen reduzierten Durchströmungswiderstand besitzt, insbesondere bei größeren Strömungsgeschwindigkeiten.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Leitschaufeln des Mischers aus einer Formgedächtnislegierung herzustellen, und zwar derart, dass sie zumindest eine Niedertemperaturform und zumindest eine Hochtemperaturform aufweisen, die für den Mischer unterschiedliche Durchströmungswiderstände erzeugen. Unterhalb einer vorbestimmten Grenztemperatur weisen die Leitschaufeln eine Niedertemperaturform auf, die einen vergleichsweise großen Durchströmungswiderstand besitzt. Oberhalb der vorbestimmten Grenztemperatur besitzen die Leitschaufeln eine Hochtemperaturform, die einen vergleichsweise niedrigen Durchströmungswiderstand besitzt. Der hohe Durchströmungswiederstand geht bei entsprechender Ausgestaltung der Leitschaufeln mit einer erhöhten Durchmischungseffektivität einher. Auf diese Weise ist sichergestellt, dass unterhalb der Grenztemperatur eine effektive Durchmischung der Strömung erfolgt. Die Effektivität der Durchmischung ist bei kleinem Durchströmungswiderstand entsprechend reduziert. Die vorliegende Erfindung beruht nun auf der Erkenntnis, dass die Abgastemperatur einerseits mit der Last der Brennkraftmaschine und andererseits aber auch mit der Drehzahl der Brennkraftmaschine korreliert. Das bedeutet, dass es bei hohen Strömungsgeschwindigkeiten in der Regel auch zu hohen Abgastemperaturen kommt, während vergleichsweise kalte Abgase regelmäßig nur bei geringen Strömungsgeschwindigkeiten auftreten. Bei hohen Strömungsgeschwindigkeiten kann auch ein Mischer mit reduzierter Mischungswirkung eine ausreichende Durchmischung der Strömung realisieren. Gleichzeitig verbessern die hohen Abgastemperaturen die Tröpfchenverdampfung und reduzieren dadurch die Gefahr eines Tröpfchendurchschlags.

Die Erfindung präsentiert somit eine Abgasanlage mit einem Mischer, der sich in besonderer Weise für eine Verwendung in der Abgasanlage eignet, da er bei niedrigen Abgastemperaturen selbsttätig eine Niedertemperaturkonfiguration einnimmt, die eine relativ hohe Mischungseffektivität besitzt, während er bei höheren Abgastemperaturen selbsttätig eine Hochtemperaturkonfiguration einnimmt, die sich durch einen reduzierten Strömungswiderstand auszeichnet. Der in der Niedertemperaturkonfiguration erhöhte Durchströmungswiderstand stört dabei nicht, da niedrige Abgastemperaturen ohnehin regelmäßig nur dann auftreten, wenn von der Brennkraftmaschine nicht die volle Leistung gefordert wird. Eine reduzierte Mischungseffektivität der Hochtemperaturkonfiguration kann ebenfalls in Kauf genommen werden, da dies durch die höheren Strömungsgeschwindigkeiten und höheren Ab-gastemperaturen hinsichtlich der zu erzielenden Homogenisierung mehr oder weniger kompensiert wird.

Formgedächtnislegierungen sind allgemein bekannt und können auch als Memory-Metall bezeichnet werden. Im englischen Sprachgebrauch findet sich die Bezeichnung "shape-memory-alloy" bzw. die Abkürzung "SMA".

Entsprechend einer vorteilhaften Ausführungsform kann die Formgedächtnislegierung so gewählt sein, dass die Leitschaufeln mit steigender Temperatur ihre Form zunehmend in Richtung abnehmendem Durchströmungswiderstand verändern. Mit anderen Worten, die Leitschaufeln verändern ihre Form proportional zur Temperatur, derart, dass mit zunehmender Temperatur der Durchströmungswiderstand abnimmt.

Bei einer alternativen Ausführungsform kann die Formgedächtnislegierung als Zweiformgedächtnislegierung ausgestaltet sein, derart, dass die Leitschaufeln abgesehen von thermischen Dehnungseffekten und abgesehen von Übergangszuständen im Bereich der Grenztemperatur unterhalb der Grenztemperatur nur eine einzige Niedertemperaturform und oberhalb der Grenztemperatur nur eine einzige Hochtemperaturform aufweisen. Mit anderen Worten, die Leitschaufeln besitzen nur die beiden Formen, zwischen denen sie abhängig von der Temperatur quasi digital umschalten. Es ist klar, dass im Bereich der Grenztemperatur transiente Formen auftreten, da ein schlagartiges Umschalten physikalisch nicht möglich ist. Dieser Übergangsbereich ist jedoch im Vergleich zu der vorstehend beschriebenen Ausführungsform mit quasi analogem Zusammenhang zwischen Temperaturänderung und Formänderung klein und kann beispielsweise einen Temperaturbereich von ± 10% der Grenztemperatur umfassen.

Es ist klar, dass je nach Ausgestaltung der Formgedächtnislegierung der Übergang zwischen der Ausgestaltung mit analogem Zusammenhang zwischen Temperaturänderung und Formänderung und der Ausgestaltung mit digitalem Zusammenhang zwischen Temperaturänderung und Formänderung fließend sein kann.

Bei einer vorteilhaften Ausführungsform können die Leitschaufeln zumindest in einem Schaufellängsabschnitt zwischen der Leitungslängsrichtung und einer Schaufellängsrichtung einen Neigungswinkel aufweisen, der in der Niedertemperaturform größer ist als in der Hochtemperaturform. Beispielsweise erstrecken sich die Leitschaufeln in der Niedertemperaturform mit ihrer Schaufellängsrichtung quer, also senkrecht zur Leitungslängsrichtung, während sie in der Hochtemperaturform einen spitzen Winkel mit der Leitungslängsrichtung einschließen. Mit abnehmendem Neigungswinkel reduziert sich der Durchströmungswiderstand.

Zusätzlich oder alternativ kann vorgesehen sein, dass die Leitschaufeln zumindest in einem Schaufellängsabschnitt zwischen der Leitungslängsrichtung und einem quer zur Schaufellängsrichtung verlaufenden Schaufelprofil einen Anstellwinkel aufweisen, der in der Niedertemperaturform größer ist als in der Hochtemperaturform. Je größer der Anstellwinkel, desto größer ist die Strömungsumlenkung am Schaufelprofil und desto größer ist auch der Durchströmungswiderstand des Mischers. Ein minimaler Durchströmungswiderstand des Mischers bzw. Umströmungswiderstand der Leitschaufel ergibt sich dann, wenn der Anstellwinkel den Wert Null einnimmt, so dass sich das Schaufel profil dann parallel zur Leitungslängsrichtung erstreckt. Ein maximaler Durchströmungswiderstand des Mischers bzw. ein maximaler Umströmungswiderstand der Leitschaufel ergibt sich dann, wenn sich das Leitschaufelprofil quer zur Leitungslängsrichtung erstreckt. Zusätzlich oder alternativ können die Leitschaufeln entlang ihrer Schaufellängsrichtung eine Verwindung aufweisen, die in der Hochtemperaturform stärker oder anders ausgeprägt ist als in der Niedertemperaturform. Bei Leitschaufeln, die im montierten Zustand in die strömungsführende Leitung freistehend hineinragen, nimmt im Falle einer Verwindung der Anstellwinkel von außen nach innen ab. Diese Winkeldifferenz zwischen äußerem Anstellwinkel und innerem Anstellwinkel kann in der Niedertemperaturform kleiner sein als in der Hochtemperaturform, bei welcher die Verbindung stärker ausgeprägt ist. Ebenso kann sich beim Wechsel von der Niedertemperaturform zur Hochtemperaturform der Drehsinn der Verwindung umkehren. Auch hierdurch kann der Strömungswiderstand einerseits und die Mischungseffektivität andererseits variiert werden.

Bei einer anderen Ausführungsform kann der Mischer einen Ringkörper aufweisen, von dem die Leitschaufeln radial nach innen abstehen. Der Ringkörper kann sich im montierten Zustand koaxial zur Leitung erstrecken. Mit Hilfe des Ringkörpers kann der Mischer als separat zur Leitung herstellbares Bauteil konzipiert werden, das in die jeweilige Leitung eingebaut werden kann. Beispielsweise lässt sich der Mischer besonders preiswert herstellen, wenn die Leitschaufeln und der Ringkörper aus einem einzigen Blechteil gebildet sind. Beispielsweise kann aus diesem Blechteil durch Umformung der Mischer aus einem Stück hergestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, schaltplanartige Prinzipdarstellung einer Brennkraftmaschine mit Abgasanlage,
- Fig. 2: eine perspektivische Ansicht eines Mischers,
- Fig. 3: eine Ansicht einer Leitschaufel quer zu einer Schaufellängsrichtung in einer Niedertemperaturform (a) und in einer Hochtemperaturform (b),
- Fig. 4: eine Ansicht der Leitschaufel parallel zur Schaufellängsrichtung in der Niedertemperaturform (a) und in der Hochtemperaturform (b).

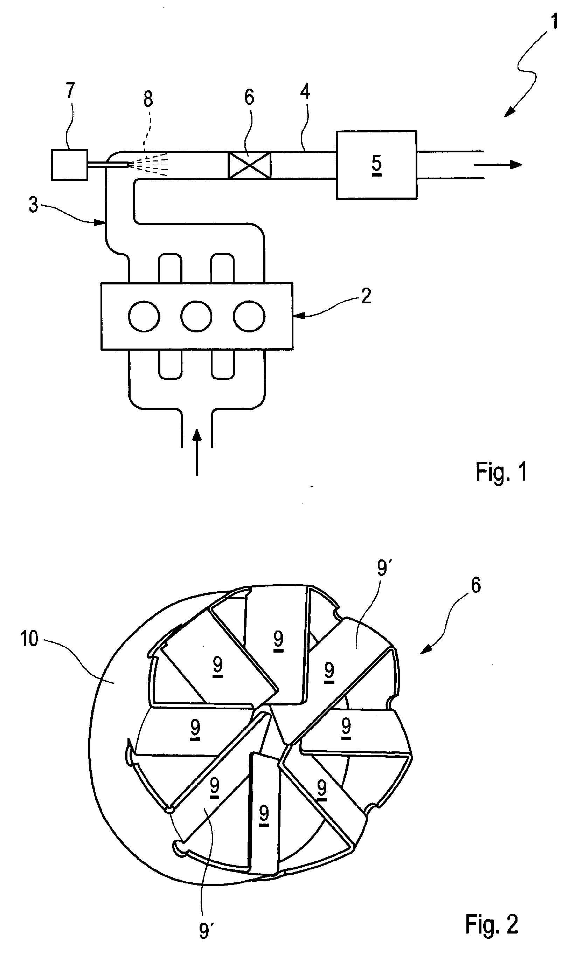

Entsprechend Fig. 1 umfasst eine Abgasanlage 1, mit deren Hilfe Abgase einer Brennkraftmaschine 2, die in einem Kraftfahrzeug angeordnet sein kann, abgeführt werden können, einen Abgasstrang 3, der eine Abgasleitung 4 und zumindest eine Abgasbehandlungseinrichtung 5 aufweist, die in die Abgasleitung 4 eingebunden ist. Ferner umfasst die Abgasanlage 1 einen statischen Mischer 6, der ebenfalls in der Abgasleitung 4 angeordnet ist.

Vorzugsweise ist die Abgasbehandlungseinrichtung 5 als SCR-Katalysator ausgestaltet, der im Folgenden ebenfalls mit 5 bezeichnet wird. In diesem Fall ist der Mischer 6 stromauf des SCR-Katalysators 5 in der Abgasleitung 4 angeordnet. Darüber hinaus besitzt die hier gezeigte Abgasanlage 1 eine Einspritzeinrichtung 7, mit deren Hilfe ein flüssiges Reduktionsmittel 8 in den Abgasstrang 3 bzw. in die Abgasleitung 4 eingespritzt werden kann. Der Mischer 6 ist dabei stromab der Einspritzeinrichtung 7 in der Abgasleitung 4 positioniert. Mit anderen Worten, der Mischer 6 ist in der Abgasleitung 4 zwischen der Einspritzeinrichtung 7 und dem SCR-Katalysator 5 angeordnet.

Der Mischer 6 dient nun zum Durchmischen der mit dem eingespritzten Reduktionsmittel beladenen Abgasströmung innerhalb der Abgasleitung 4. Allgemein dient der Mischer 6 zum Durchmischen einer Strömung in einer die Strömung führenden Leitung (Abgasleitung 4).

Alternativ dazu kann die Abgasbehandlungseinrichtung 5 als Oxidationskatalysator ausgestaltet sein, der im Folgenden ebenfalls mit 5 bezeichnet wird. Stromab des Oxidationskatalysators 5 kann dann zweckmäßig ein Partikelfilter 19 in der Abgasleitung 4 als weitere Abgasbehandlungseinrichtung angeordnet sein. Dies ist bevorzugt bei einer als Dieselmotor ausgestalteten Brennkraftmaschine 2 der Fall. Dann handelt es sich beim Oxidationskatalysator 5 um einen Dieseloxidationskatalysator 5 oder kurz DOC 5, während das Partikelfilter 19 dann ein Dieselpartikelfilter 19 ist. Bei einer solchen Ausführungsform ist der Mischer 6 stromauf des Oxidationskatalysators 5 in der Abgasleitung 4 angeordnet. Darüber hinaus besitzt die Abgasanlage 1 dann wieder eine Einspritzeinrichtung 7, mit deren Hilfe nun ein flüssiger Kraftstoff 8 in den Abgasstrang 3 bzw. in die Abgasleitung 4 eingespritzt werden kann. Der Mischer 6 ist dabei stromab der Einspritzeinrichtung 7 in der Abgasleitung 4 positioniert. Mit anderen Worten, der Mischer 6 ist in der Abgasleitung 4 zwischen der Einspritzeinrichtung 7 und dem Oxidationskatalysator 5 angeordnet.

Der Mischer 6 dient nun zum Durchmischen der mit dem eingespritzten Kraftstoff 8 beladenen Abgasströmung innerhalb der Abgasleitung 4. Allgemein dient der Mischer 6 auch hier wieder zum Durchmischen einer Strömung in einer die Strömung führenden Leitung (Abgasleitung 4).

Der eingespritzte Kraftstoff 8 wird am Oxidationskatalysator 5 umgesetzt, wobei Wärme entsteht, die vom Abgas aufgenommen und zu nachfolgenden Komponenten der Abgasanlage 3 transportiert wird, um diese zum Beispiel bei einem Kaltstart rasch auf Betriebstemperatur aufzuheizen. Im gezeigten Beispiel kann die Wärme zum Partikelfilter 19 transportiert werden, um diesen auf eine Selbstentzündungstemperatur der darin eingelagerten Partikel aufzuheizen, um so eine Regeneration des Partikelfilters 19 anzustoßen.

Entsprechend Fig. 2 weist der Mischer 6 mehrere Leitschaufeln 9 auf. Diese können bei der in Fig. 2 gezeigten Ausführungsform sternförmig angeordnet sein. Dabei kann der Mischer 6 einen Ringkörper 10 aufweisen, dessen, z.B. kreisförmiger, Außenquerschnitt komplementär zu einem Innenquerschnitt der Leitung 4 geformt ist. Von diesem Ringkörper 10 stehen die Leitschaufeln 9 im Beispiel radial nach innen ab. Bevorzugt lassen sich die Leitschaufeln 9 und der Ringkörper 10 aus einem einzigen Blechteil herstellen. Hierzu kann beispielsweise ein ebener Blechstreifen beschnitten bzw. gestanzt werden, um die Leitschaufeln 9 frei zu schneiden. Durch Abkanten bzw. Abwinkeln der Leitschaufeln 9 und durch Umformen des übrigen Blechstreifens kann dann der Ringkörper 10 mit den Leitschaufeln 9 und somit der Mischer 6 geformt werden. Zweckmäßig stehen die Leitschaufeln 9 vom Ringkörper 10 nur soweit nach innen ab, dass sie sich nicht gegenseitig berühren. Vorzugsweise ragen somit alle Leitschaufeln 9 mit einem Ende freistehend in den durchströmbaren Querschnitt hinein. Im montierten Zustand des Mischers 6 ragen die Leitschaufeln 9 somit freistehend in die Leitung 4 hinein. Im Beispiel sind zwei Leitschaufeln 9' mit abgeschrägten inneren Enden versehen und einander diametral gegenüberliegend angeordnet. Die übrigen Leitschaufeln 9 besitzen keine solchen abgeschrägten inneren Enden, sondern quer zur Schaufellängsrichtung verlaufende Stirnseiten. Die beiden Leitschaufeln 9' mit abgeschrägten Stirnseiten sind in ihrer Längsrichtung jeweils größer als ein Radius des Innenquerschnitts des Ringkörpers 10. Im Unterschied dazu sind die anderen Leitschaufeln 9 in ihrer Längsrichtung kürzer als der Radius des Ringkörpers 10.

Unabhängig davon, wie nun die Leitschaufeln 9 innerhalb des Mischers 6 angeordnet und/oder ausgestaltet sind, zeichnet sich der hier vorgestellte Mischer 6 dadurch aus, dass seine Leitschaufeln 9 aus einer Formgedächtnislegierung hergestellt sind. Dabei sind die Leitschaufeln 9 mit Hilfe der Formgedächtnislegierung so konzipiert und konstruiert, dass sie unterhalb einer vorbestimmten Grenztemperatur zumindest eine Niedertemperaturform aufweisen und oberhalb dieser Grenztemperatur zumindest eine Hochtemperaturform aufweisen. Die Form der Leitschaufeln 9 bestimmt den Durchströmungswiderstand des Mischers 6. Die Niedertemperaturform ist nun so gewählt, dass sich ein höherer Durchströmungswiderstand ergibt als in der Hochtemperaturform. Mit anderen Worten, oberhalb der Grenztemperatur besitzt der Mischer 6 einen kleineren Durchströmungswiderstand als unterhalb der Grenztemperatur.

Die Formgedächtnislegierung für die Herstellung der Leitschaufeln 9 kann nun so gewählt sein, dass die Leitschaufeln 9 oberhalb der Grenztemperatur mit steigender Temperatur ihre Hochtemperaturform zunehmend in Richtung abnehmendem Durchströmungswiderstand verändern. Hierdurch ergibt sich quasi ein analoger Zusammenhang zwischen Temperaturänderung und Formänderung der Leitschaufeln 9.

Alternativ dazu kann die Formgedächtnislegierung zum Herstellen der Leitschaufeln 9 auch als Zweiformgedächtnislegierung ausgestaltet sein, derart, dass die Leitschaufeln 9 unterhalb der Grenztemperatur nur eine einzige Niedertemperaturform und oberhalb der Grenztemperatur nur eine einzige Hochtemperaturform aufweisen. Es ist klar, dass hierbei thermische Dehnungseffekte und Übergangszustände im Bereich der Grenztemperatur auszublenden sind. Ein derartiger Übergangsbereich kann beispielsweise ± 10% der Grenztemperatur umfassen. Durch diese Gestaltung ergibt sich quasi ein digitaler Zusammenhang zwischen Temperaturänderung und Formänderung. Es ist klar, dass auch grundsätzlich Mischformen oder Zwischenformen der hier beschriebenen analogen oder digitalen Zusammenhänge realisierbar sind.

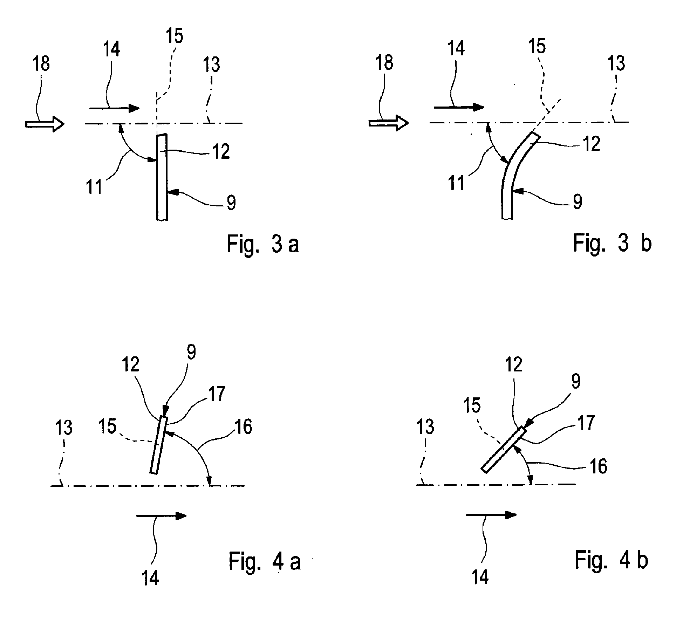

In den Fig. 3a und 3b ist ein Neigungswinkel 11 eingetragen, den die jeweilige Leitschaufel 9 zumindest bei einem freistehenden inneren Endabschnitt 12 aufweist. Dieser Neigungswinkel 11 liegt dabei zwischen einer Leitungslängsrichtung 13, die sich koaxial zur Leitung 4 erstreckt und welche parallel zu der in der Leitung 4 geführten, durch einen Pfeil repräsentierten Strömung 14 verläuft, und einer Schaufellängsrichtung 15, mit der die jeweilige Leitschaufel 9 in den durchströmbaren Querschnitt hineinragt. Die Ausgestaltung der jeweiligen Leitschaufel 9 mit Hilfe der Formgedächtnislegierung kann nun z.B. so konzipiert sein, dass dieser Neigungswinkel 11 in der Fig. 3a gezeigten Niedertemperaturform größer ist als in der in Fig. 3b gezeigten Hochtemperaturform. Mit abnehmendem Neigungswinkel 11 sinkt der Umströmungswiderstand der jeweiligen Leitschaufel 9 und somit der Durchströmungswiderstand des Mischers 6.

Die Fig. 4a und 4b zeigen eine weitere Gestaltungsmöglichkeit, die zusätzlich oder alternativ zu der in Fig. 3a und 3b gezeigten Konfiguration realisierbar ist. In den Fig. 4a und 4b ist ein Anstellwinkel 16 eingetragen, den die jeweilige Leitschaufel 9 zumindest in einem in den Strömungsquerschnitt hineinragenden Endabschnitt 12 gegenüber der Leitungslängsrichtung 13 einnimmt. Gemessen ist dieser Anstellwinkel 16 dabei gegenüber einem Schaufelprofil 17, das sich quer zur Schaufellängsrichtung 15 erstreckt. Erkennbar kann nun die jeweilige Leitschaufel 9 in Verbindung mit der Formgedächtnislegierung so konzipiert sein, dass der Anstellwinkel 16 in der in Fig. 4a gezeigten Niedertemperaturform größer ist als in der in Fig. 4b gezeigten Hochtemperaturform. Mit abnehmendem Anstellwinkel 16 sinkt der Umströmungswiderstand der jeweiligen Leitschaufel 9 und somit der Durchströmungswiderstand des Mischers 6.

Eine derartige Veränderung des Anstellwinkels 16 am freistehenden Endabschnitt 12 der jeweiligen Leitschaufel 9 lässt sich beispielsweise dadurch realisieren, dass die jeweilige Leitschaufel 9 entlang ihrer Schaufellängsrichtung 15 eine Verwindung besitzt. Eine derartige Verwindung charakterisiert sich dadurch, dass die verwundene Leitschaufel 9 radial außen, also insbesondere am Übergang zum Ringkörper 10 im Profil 17 einen anderen Anstellwinkel 16 aufweist als an ihrem innenliegenden Ende 12. Beispielsweise kann der Anstellwinkel 16 von außen nach innen abnehmen oder zunehmen. Diese Verwindungen können nun in der Niedertemperaturform anders sein als in der Hochtemperaturform. Beispielsweise kann vorgesehen sein, dass die Verwindung der jeweiligen Leitschaufel 9 in der Hochtemperaturform stärker ausgeprägt ist als in der Niedertemperaturform. Hierdurch kann zum Beispiel kann der Anstellwinkel 16 im Bereich des inneren Endes 12 beim Übergang in die Hochtemperaturform reduziert werden. Ebenso ist es möglich, dass die Verwindung beim Übergang von der Niedertemperaturform in die Hochtemperaturform ihr Vorzeichen ändert. Beispielsweise kann die jeweilige Leitschaufel 9 radial außen, also z.B. am Ringkörper 10, einen Anstellwinkel 16 von zum Beispiel 45° aufweisen, der sowohl in der Niedertemperaturform als auch in der Hochtemperaturform erhalten bleibt. In der Niedertemperaturform führt die Verwindung der jeweiligen Leitschaufeln 9 jedoch dazu, dass sich am inneren Ende 12 ein größerer Anstellwinkel 16 einstellt, von zum Beispiel 60°. Bei der Hochtemperaturform kann sich dagegen am inneren Ende 12 ein kleinerer Anstellwinkel 16 einstellen, der beispielsweise bei 30° liegen kann.

Die Fig. 3a und 3b machen dabei außerdem deutlich, dass die jeweilige Leitschaufel 9 in ihrer in Fig. 3a gezeigten Niedertemperaturform quer zur Leitungslängsrichtung 13, also in Richtung der Schaufellängsrichtung 15 weiter in den durchströmbaren Querschnitt der Leitung 4 hineinragt als in der Hochtemperaturform gemäß Fig. 3b. Beispielsweise repräsentiert die Leitungslängsrichtung 13 in den Fig. 3a und 3b eine Längsmittelachse der Leitung 4. Erkennbar ist nun das stirnseitige Ende der jeweiligen Leitschaufel 9 in der Niedertemperaturform gemäß Fig. 3a näher an dieser Längsmittelachse als in der Hochtemperaturform gemäß Fig. 3b.

Des Weiteren ist in den Fig. 3a und 3b durch einen Pfeil 18 eine Projektion angedeutet, die sich parallel zur Leitungslängsrichtung 13 erstreckt. Diese Projektion 18 der Leitschaufeln 9 erzeugt in der Niedertemperaturform gemäß Fig. 3a eine größere Projektionsfläche als in der Hochtemperaturform gemäß Fig. 3b.

## Patentansprüche

1. Abgasanlage für eine Brennkraftmaschine (2), insbesondere eines Kraftfahrzeugs, die einen Abgasstrang (3) mit einer Abgasleitung (4) und mit einer in die Abgasleitung (4) eingebundenen Abgasbehandlungseinrichtung aufweist, die ein SCR-Katalysator (5) ist,
wobei in der Abgasleitung (4) stromauf des SCR-Katalysators (5) eine Einspritzeinrichtung (7) zum Einspritzen eines flüssigen Reduktionsmittels (8) in den Abgasstrang (3) angeordnet ist,
wobei in der Abgasleitung (4) zwischen der Einspritzeinrichtung (7) und dem SCR-Katalysator (5) zumindest ein statischer Mischer (6) angeordnet ist, der mehrere Leitschaufeln (9) und einen Ringkörper (10) aufweist, von dem die Leitschaufeln (9) radial nach innen abstehen,
**dadurch gekennzeichnet,**
**dass** die Leitschaufeln (9) aus einer Formgedächtnislegierung hergestellt sind, unterhalb einer vorbestimmten Grenztemperatur zumindest eine Niedertemperaturform aufweisen und oberhalb der Grenztemperatur zumindest eine Hochtemperaturform aufweisen, die sich von der Niedertemperaturform durch einen reduzierten Durchströmungswiderstand des Mischers (6) unterscheidet.

2. Abgasanlage für eine Brennkraftmaschine (2), insbesondere eines Kraftfahrzeugs, die einen Abgasstrang (3) mit einer Abgasleitung (4) und mit einer in die Abgasleitung (4) eingebundenen Abgasbehandlungseinrichtung aufweist, die ein Oxidationskatalysator (5) ist,
wobei in der Abgasleitung (4) stromauf des Oxidationskatalysators (5) eine Einspritzeinrichtung (7) zum Einspritzen eines flüssigen Kraftstoffs (8) in den Abgasstrang (3) angeordnet ist,
wobei in der Abgasleitung (4) zwischen der Einspritzeinrichtung (7) und dem Oxidationskatalysator (5) zumindest ein statischer Mischer (6) angeordnet ist, der mehrere Leitschaufeln (a) und einen Ringkörper (10) aufweist, von dem die Leitschaufeln (9) radial nach innen abstehen,
**dadurch gekennzeichnet,**
**dass** die Leitschaufeln (9) aus einer Formgedächtnislegierung hergestellt sind, unterhalb einer vorbestimmten Grenztemperatur zumindest eine Niedertemperaturform aufweisen und oberhalb der Grenztemperatur zumindest eine Hochtemperaturform aufweisen, die sich von der Niedertemperaturform durch einen reduzierten Durchströmungswiderstand des Mischers (6) unterscheidet.

3. Abgasanlage nach Anspruch 1 oder 2,
**dadurch gekennzeichnet,**
**dass** die Leitschaufeln (9) mit steigender Temperatur ihre Form zunehmend in Richtung abnehmendem Durchströmungswiderstand verändern.

4. Abgasanlage nach Anspruch 1 oder 2,
**dadurch gekennzeichnet,**
**dass** die Formgedächtnislegierung als Zweiformgedächtnislegierung ausgestaltet ist und die Leitschaufeln (9) abgesehen von thermischen Dehnungseffekten und abgesehen von Übergangszuständen im Bereich der Grenztemperatur unterhalb der Grenztemperatur nur eine Niedertemperaturform und oberhalb der Grenztemperatur nur eine Hochtemperaturform aufweisen.

5. Abgasanlage nach einem der Ansprüche 1 bis 4,
**dadurch gekennzeichnet,**
- **dass** die Leitschaufeln (9) zumindest in einem Schaufellängsabschnitt (12) zwischen der Leitungslängsrichtung (13) und einer Schaufellängsrichtung (15) einen Neigungswinkel (11) aufweisen, der in der Niedertemperaturform größer ist als in der Hochtemperaturform, und/oder
- **dass** die Leitschaufeln (9) zumindest in einem Schaufellängsabschnitt (12) zwischen der Leitungslängsrichtung (13) und einem quer zur Schaufellängsrichtung (15) verlaufenden Schaufelprofil (17) einen Anstellwinkel (16) aufweisen, der in der Niedertemperaturform größer ist als in der Hochtemperaturform, und/oder
- **dass** die Leitschaufeln (9) entlang ihrer Schaufellängsrichtung (15) eine Verwindung aufweisen, wobei sich die in der Hochtemperaturform vorliegende Verwindung von der in der Niedertemperaturform vorliegenden Verwindung hinsichtlich Verwindungsrichtung und/oder Verwindungsgröße voneinander unterscheiden.

6. Abgasanlage nach einem der Ansprüche 1 bis 5,
**dadurch gekennzeichnet,**
**dass** die Leitschaufeln (9) in ihrer Niedertemperaturform quer zur Leitungslängsrichtung (13) weiter in die Leitung (4) hineinragen als in ihrer Hochtemperaturform.

7. Abgasanlage nach einem der Ansprüche 1 bis 6,
**dadurch gekennzeichnet,**
**dass** die Leitschaufeln (9) in einer parallel zur Leitungslängsrichtung (13) orientierten Projektion in der Niedertemperaturform eine größere Projektionsfläche aufweisen als in der Hochtemperaturform.

8. Abgasanlage nach einem der Ansprüche 1 bis 7,
**dadurch gekennzeichnet,**
**dass** die Leitschaufeln (9) und der Ringkörper (10) aus einem einzigen Blechteil gebildet sind, insbesondere durch Umformung hergestellt sind.

9. Abgasanlage nach einem der Ansprüche 1 bis 8,
**dadurch gekennzeichnet,**
**dass** alle Leitschaufeln (9) mit einem Ende freistehend in den durchströmbaren Querschnitt hineinragen.

10. Abgasanlage zumindest nach Anspruch 2,
**dadurch gekennzeichnet,**
**dass** in der Abgasleitung (4) stromab des Oxidationskatalysators (5) ein Partikelfilter (19) angeordnet ist.

## Claims

1. An exhaust system for an internal combustion engine (2), in particular of a motor vehicle, comprising an exhaust tract (3) with an exhaust line (4) and with an exhaust gas treatment device incorporated in the exhaust line (4), which is an SCR-catalytic converter (5),
wherein in the exhaust line (4) upstream of the SCR-catalytic converter (5) an injection device (7) for injecting a liquid reduction agent (8) is arranged in the exhaust tract (3),
wherein in the exhaust line (4) between the injection device (7) and the SCR-catalytic converter (5) at least one static mixer (6) is arranged, which comprises multiple guide blades (9) and an annular body (10), from which the guide blades (9) radially project to the inside,
**characterized in that**
the guide blades (9) are produced from a shape memory alloy, have at least one low temperature shape below a predetermined limit temperature and have at least one high temperature shape above the limit temperature, which differs from the low temperature shape by a reduced through-flow resistance of the mixer (6).

2. The exhaust system for an internal combustion engine (2), in particular of a motor vehicle, comprising an exhaust tract (3) with an exhaust line (4) and with an exhaust gas treatment device incorporated in the exhaust line (4), which is an oxidation catalytic converter (5),
wherein in the exhaust line (4) upstream of the oxidation catalytic converter (5) an injection device (7) for injecting a liquid fuel (8) into the exhaust tract (3) is arranged,
wherein in the exhaust line (4) between the injection device (7) and the oxidation catalytic converter (5) at least one static mixer (6) is arranged, which comprises multiple guide blades (9) and an annular body (10), from which the guide blades (9) project radially to the inside,
**characterized in that**
the guide blades (9) are produced from a shape memory alloy, have at least one low temperature shape below a predetermined limit temperature and have at least one high temperature shape above the limit temperature, which differs from the low temperature shape by a reduced through-flow resistance of the mixer (6).

3. The exhaust system according to claim 1 or 2,
**characterized in that**
the guide blades (9) with rising temperature increasingly change their shape in direction of decreasing through-flow resistance.

4. The exhaust system according to claim 1 or 2,
**characterized in that**
the shape memory alloy is configured as a two-shape memory alloy and the guide blades (9) apart from thermal expansion effects and apart from transitional states in the region of the limit temperature only have a low temperature shape below the limit temperature and only have a high temperature shape above the limit temperature.

5. The exhaust system according to any one of the claims 1 to 4,
**characterized**
- **in that** the guide blades (9) at least in one blade longitudinal section (12) between the line longitudinal direction (13) and a blade longitudinal direction (15) have an angle of inclination (11) which in the low temperature shape is greater than in the high temperature shape and/or
- **in that** the guide blades (9) at least in one blade longitudinal section (12) between the line longitudinal direction (13) and a blade profile (17) running transversely to the blade longitudinal direction (15) have a blade angle (16), which in the low temperature shape is greater than in the high temperature shape, and/or
- **in that** the guide blades (9) along their blade longitudinal direction (15) have a twist, wherein the twist that is present in the high temperature shape differs from the twist that is present in the low temperature shape with respect to twist direction and/or twist size.

6. The exhaust system according to any one of the claims 1 to 5,
**characterized in that**
the guide blades (9) in their low temperature shape transversely to the line longitudinal direction (13) project further into the line (4) than in their high temperature shape.

7. The exhaust system according to any one of the claims 1 to 6,
**characterized in that**
the guide blades (9) in a projection which is orientated parallel to the line longitudinal direction (13) in the low temperature shape have a larger projection area than in the high temperature shape.

8. The exhaust system according to any one of the claims 1 to 7,
**characterized in that**
the guide blades (9) and the annular body (10) are formed of a single sheet metal part, in particular through forming.

9. The exhaust system according to any one of the claims 1 to 8,
**characterized in that**
all guide blades (9) project with one end into the cross section through which a flow can flow in a freestanding manner.

10. The exhaust system at least according to claim 2,
**characterized in that**
in the exhaust line (4) downstream of the oxidation catalytic converter (5) a particle filter (19) is arranged.

## Revendications

1. Installation de gaz d'échappement pour un moteur à combustion interne (2), notamment d'un véhicule automobile, qui est une colonne de gaz d'échappement (3) avec une conduite de gaz d'échappement (4) et comportant un dispositif de traitement des gaz d'échappement incorporé dans la conduite de gaz d'échappement (4), qui est un catalyseur SCR (5),
dans laquelle dans la conduite de gaz d'échappement (4) en amont du catalyseur SCR (5) un dispositif d'injection (7) pour injecter un agent de réduction liquide (8) dans la colonne de gaz d'échappement (3) est disposé,
dans laquelle dans la conduite de gaz d'échappement (4) entre le dispositif d'injection (7) et le catalyseur SCR (5) au moins un mélangeur statique (6) est disposé, qui présente plusieurs pales directrices (9) et un corps annulaire (10), duquel les pales directrices (9) dépassent radialement vers l'intérieur,
**caractérisée en ce que**
les pales directrices (9) sont fabriquées dans un alliage à mémoire de forme, présentent au-dessous d'une température limite prédéterminée au moins une forme de basse température et présentent au-dessous de la température limite au moins une forme de haute température, qui se différencie de la forme de basse température par une résistance à l'écoulement réduite du mélangeur (6).

2. Installation de gaz d'échappement pour un moteur à combustion interne (2), notamment d'un véhicule automobile, qui présente une colonne de gaz d'échappement (3) comportant une conduite de gaz d'échappement (4) et comportant un dispositif de traitement des gaz d'échappement incorporé dans la conduite de gaz d'échappement (4), qui est un catalyseur d'oxydation (5),
dans laquelle dans la conduite de gaz d'échappement (4) en amont du catalyseur d'oxydation (5) un dispositif d'injection (7) pour injecter un carburant liquide (8) dans la colonne de gaz d'échappement (3) est disposé,
dans laquelle dans la conduite de gaz d'échappement (4) entre le dispositif d'injection (7) et le catalyseur d'oxydation (5) au moins un mélangeur statique (6) est disposé, qui présente plusieurs pales directrices (9) et un corps annulaire (10), duquel les pales directrices (9) dépassent radialement vers l'intérieur,
**caractérisée en ce que**
les pales directrices (9) sont fabriquées dans un alliage à mémoire de forme, présentent au-dessous d'une température limite prédéterminée au moins une forme de basse température et présentent au-dessus de la température limite au moins une forme de haute température, qui se différencie de la forme de basse température par une résistance à l'écoulement réduite du mélangeur (6).

3. Installation de gaz d'échappement selon les revendications 1 ou 2,
**caractérisée en ce que**
les pales directrices (9) changent de forme à mesure que la température augmente de manière croissante dans la direction de la résistance à l'écoulement décroissante.

4. Installation de gaz d'échappement selon les revendications 1 ou 2,
**caractérisée en ce que**
l'alliage à mémoire de forme est conçu comme un alliage à mémoire de forme double et les pales directrices (9) présentent en dehors des effets de dilatation thermique et en dehors des états de transition dans la plage de température limite au-dessus de la température limite seulement une forme de basse température et au-dessous de la température limite seulement une forme de haute température.

5. Installation de gaz d'échappement selon une des revendications 1 à 4,
**caractérisée en ce que**
- les pales directrices (9) présentent au moins dans une portion longitudinale de pale (12) entre la direction longitudinale de conduite (13) et une direction longitudinale de pale (15) un angle d'inclinaison (11), qui est plus grand dans la forme de basse température que dans la forme de basse température, et/ou
- les pales directrices (9) présentent au moins dans une position longitudinale de pale (12) entre ma direction longitudinale de conduite (13) et un profilé de pale (17) s'étendant transversalement à la direction longitudinale de pale (15) un angle d'attaque (16), qui est plus grand dans la forme de basse température que dans la forme de haute température, et/ou
- les pales directrices (9) présentent le long de leur direction longitudinale de pale (15) une torsion, dans laquelle la torsion prédominante dans la forme de température haute se différencie de la torsion prédominante dans la forme de basse température en ce qui concerne la direction de torsion et/ou la grandeur de torsion.

6. Installation de gaz d'échappement selon une des revendications 1 à 5,
**caractérisée en ce que**
les pales directrices (9) dans leur forme de basse température dépassent davantage à l'intérieur de la conduite (4) transversalement à la direction longitudinale de conduite (13) que dans leur forme de haute température.

7. Installation de gaz d'échappement selon une des revendications 1 à 6,
**caractérisée en ce que**
les pales directrices (9) présentent dans une projection orientée parallèlement à la direction longitudinale de conduite (13) dans la forme de basse température une plus grande surface de projection que dans la forme de température haute.

8. Installation de gaz d'échappement selon une des revendications 1 à 7,
**caractérisée en ce que**
les pales directrices (9) et le corps annulaire (10) sont formées à partir d'une pièce de tôle unique, notamment fabriquées par déformation.

9. Installation de gaz d'échappement selon une des revendications 1 à 8,
**caractérisée en ce que**
les pales directrices (9) dépassent par une extrémité à découvert dans la section transversale traversée par un écoulement.

10. Installation de gaz d'échappement selon au moins la revendication 2,
**caractérisée en ce que**
dans la conduite de gaz d'échappement (4) en aval du catalyseur d'oxydation (5), un filtre à particules (19) est disposé.
